# EUROPÄISCHE PATENTANMELDUNG

(11) **EP 4 134 565 A1**
(43) Veröffentlichungstag der Anmeldung: **15.02.2023**
(21) Anmeldenummer: 21191194.6
(22) Anmeldetag: 13.08.2021
(51) Int. Cl.: F16F 1/02, A44C 5/00, A44C 27/00

(54) **KLAPPARMBAND FÜR DAS HANDGELENK MIT AUFKLAPPBAREM BAND**

(71) Anmelder: Sonnensee GmbH, 1130 Wien (AT)
(72) Erfinder: RIABENKO, Eugene, 65101 Odessa (UA); VARTANOV, Semen, 1220 Wien (AT); IVANOV, Oleksii, 65111 Odessa (UA)
(74) Vertreter: Jeck, Anton

(57) **Zusammenfassung**

Die vorliegende Erfindung betrifft ein Handgelenk umschließendes Klapp-Armband, aufweisend ein Band (2) und ein Korpus (1), welcher mit dem Band (2) verbunden ist, mit einem endseitig angeordneten ersten Modul (3), aufweisend mindestens zwei feste bogenförmige Elemente, einem reversibel verformbaren Teil (4), welches ein multistabiles Element aufweist, wobei das multistabile Element sowohl in einer linearen Ausrichtung als auch in einer aufgerollten Ausrichtung eine stabilisierte Form einnimmt und ein zweites steifes Modul (5), an welchem das Band angeordnet ist, wobei das Band gegenüber dem Korpus frei schwingend angeordnet ist.

## Beschreibung

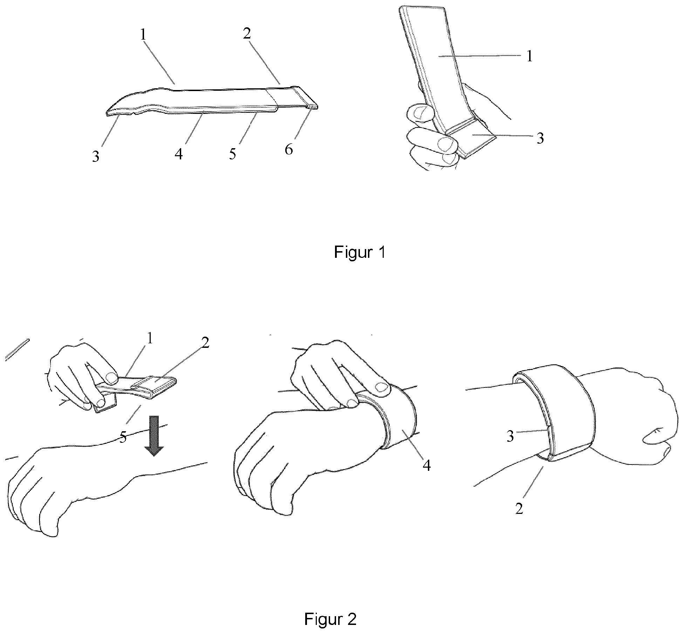

Das Klapparmband für das Handgelenk mit aufklappbarem Scharnierband gehört zu den tragbaren Geräten. Es kann alltäglich oder für besondere Anlässe genutzt werden Die vorliegende Erfindung umgeht das Problem bekannter Armbänder der fehlenden Möglichkeit das Armband mit einer Handbewegung schnell und bequem auszuziehen. Dabei kann es im ausgezogenen Zustand eine flache Form annehmen und aus diesem Zustand heraus auch mit einer Handbewegung wieder angezogen werden kann. Das An- und Abziehen des Armbands kann mit einer Hand erfolgen. Im Wesentlichen weist das Armband einen Korpus 1 und ein Band 2 auf. Figur 1.

Der Korpus kann mindestens eines der folgenden Bestandteile aufweisen: Ein großes Modul 3, vorzugsweise gebogen, vorzugsweise aufweisend 2 starre Elemente, die durch ein Scharnier verbunden sein können.

Ein bewegliches Teil 4, welches auch als reversible verformbar bezeichnet werden kann, vorzugsweise aufweisend ein multistabiles Element, und/oder ein kleines Modul 5, das mit dem aufklappbaren Scharnierband mit Magnetverschluss verbunden sein kann. Das Armband lässt sich dank des multistabilen Elements im beweglichen Teil 4 des Armbands zusammenklappen, wobei das Band durch das kleine, sich am Umfang des Handgelenks entlang bewegende Modul 5, übergeklappt wird und sich der Magnetverschluss 7 mit dem großen Modul 3 verbindet. In diesem Zustand ist das Armband angelegt und magnetisch verschlossen (Fig. 2). Vorzugsweise kann das kleine Modul 5 als Verlängerung des multistabilen Elements, insbesondere als Teil des Korpus vorgesehen sein. Dies kann der Kinemathek des Armbands beim Verschließen zuträglich sein, während das multistabile Element einen Wechsel von einem in einen anderen stabilen Zustand vornimmt und dabei das Band 2 um das Handgelenk geschwungen wird.

"Großes Modul" und "kleines Modul" können insbesondere als relative Eigenschaften verstanden werden, nämlich, dass das eine Modul größer ist als das andere.

Das Armband wird angezogen, indem das große Modul 3 mit der freien Hand gepackt wird und in einer geraden Linie senkrecht zum Handgelenk geführt wird, auf welches es angezogen wird; dabei klappt sich das Armband automatisch zusammen, indem sich das linear ausgerichtete multistabile Element aufrollt und sich verschließt, wie in Abbildung 2 gezeigt wird. Damit sich das erfindungsgemäße2 Armband richtig verschließt, und zwar bei verschieden großen Handgelenken, kann das Band, im Gegensatz zum bekannten Slap-Armband [1], an den Schiebeverschluss 7 mit einer speziell entwickelten Klemme festgelegt werden kann, die es ermöglicht, das Band in die benötigte Länge zuzuschneiden.

Zur Verriegelung der beiden Enden des Armbands kann ein Magnetverschluss verwendet werden [6], der durch seine Konstruktion automatisch einrastet und verriegelt.

Die erfindungsgemäße Klemme 6 umschließt im verbindungsgemäßen Zustand das Band 2 von beiden Seiten, wobei eine Kannte oder Zahnung der Klemme 6 in das Band 2 eingebracht werden kann, um dessen Halt an dem Band zu verstärken und dessen Kraftschluss zu erhöhen.

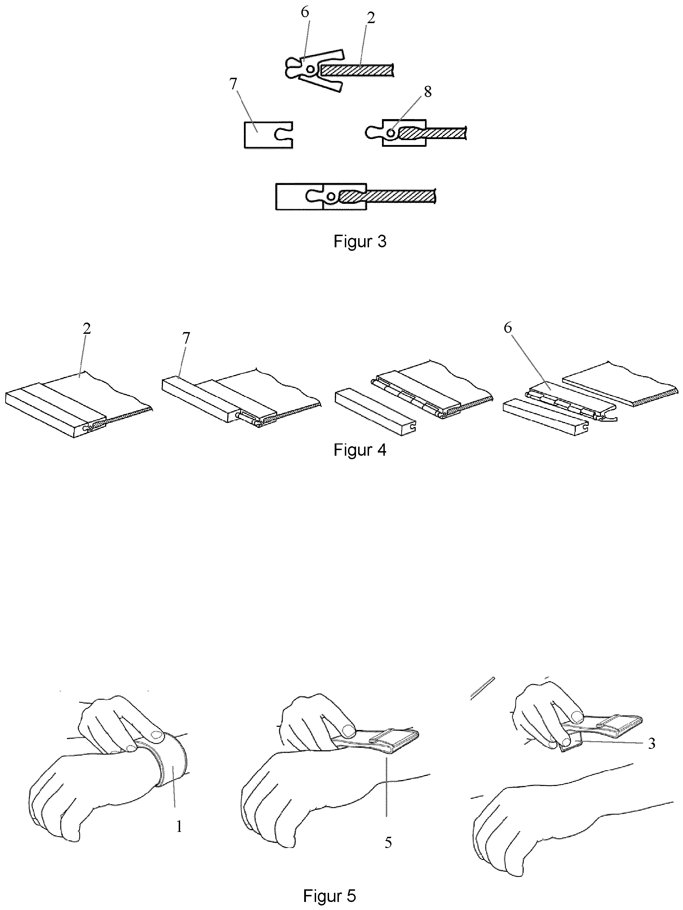

Mittels des in Fig. 3 dargestellten Schiebeverschlusses 7 lassen sich die beiden scherenartigen Flügel des Klemme 6 in Ihrer verbindenden/kraftschlüssigen Position mit dem Band 2 festlegen.

Vorzugsweise weisen die Flügel der Klemme 6 relativ zu deren Klappachse 8 auf einer der Kannte oder Zahlung gegenüberliegenden Seite jeweils mindestens eine Feder oder Nase auf, die zu einer Nut des Schiebeverschlusses korrespondiert und verbindungszustand darin festlegbar ist.

Im betriebsgemäßen Verbindungszustand von Schiebeverschluss 7 und Klemme 6 ist ein Öffnen der Flügel der Klemme 6 verhindert, da zum Öffnen der Klemme 6 die Federn oder Nasen in gegenläufiger Richtung zueinander um die Achse 8 zu bewegen sind. Alternativ kann das Öffnen auch dadurch verhindert sein, dass der Schiebeverschluss 7 an den dem Schiebeverschluss 7 zugewandte Flächen der Klemme 6 anliegt und dadurch eine relative Verlagerung der Flügel der Klemme 6 zueinander verhindert (Fig. 3).

Die Klemme kann zwei Teile in Form eines Jochs aufweisen, die durch die Achse 8, in Form eines zylindrischen Gelenks, so verbunden sind, dass auf einer Seite der Achse die Enden der beiden Teile/Flügel eine Klemme 6 bilden und auf der anderen Seite die gegenüberliegenden Enden derselben Teile ein spezielles Element bilden, das die Form eine Nase /Feder annimmt, wenn die Klemme 6 mit dem darin eingelegten Band 2 geschlossen ist. Die Klemme 6 in dessen geschlossener Position wird dabei durch die Befestigung in dem Schiebeverschluss 7 durch eine Art Nut-Feder-Verbindung fixiert.

Im geschlossenen Zustand hält die Klemme 6 das flache Material des Bands 2 darin fest und kann an dem starren Element 7 befestigt werden. Um das Band zu lösen, wird die Klemme 6 aus dem Schiebeverschluss 7 durch eine schiebende Bewegung gelöst, wodurch die zwei Teile der Klemme 6 als Scharnier beweglich werden, und das Band freigeben, wie in Fig. 4 zu sehen.

Für die Befestigung des Bands 2 am Schiebeverschluss 7 mithilfe der Klemme 6, wird das Band in die der Nase/Feder gegenüberliegende Seite zwischen die zwei Teile der Klemme 6 eingeführt, vorzugsweise bis zur Achse 8, danach wird die Klemme 6 verschlossen und hält das Band 2 fest. Dadurch formt sich die Nase/Feder auf der anderen Seite, die dann in den Schiebeverschluss 7 eingesetzt werden kann.

Diese Klemme 6 ist eine wiederverwendbare und schnelle Verschlussverbindung für verschiedene Bänder 2 und Verschlüsse, die sich durch ihre Wiederverwendbarkeit, einfache Konstruktion, schnellen Verschluss und sichere Befestigung auszeichnet. Sie kann in den Fällen verwendet werden, in denen es erforderlich ist, das Band erneut an der Klemme zu befestigen z.B. aufgrund von Materialverschleiß, Größenanpassung oder Austausch.

Im geschlossenen Zustand oder am Handgelenk kann das Armband eine gleichmäßig abgerundete Außenform aufweisen, welche sich durch abgerundete Fasen der Kanten, Elemente und Details des Armbandes auszeichnen kann. Aus diesem Grund bleibt das Armband nicht an den Klamotten hängen und erzeugt ein angenehmes taktiles Gefühl.

Das Armband kann ausgezogen werden, indem das große Modul 3 mit der freien Hand gepackt wird, die Magnetverriegelung mit einem Finger gelöst wird und das ganze Armband so vom Handgelenk gezogen wird, dass das kleine Modul 5 auf das Handgelenk gedrückt wird. Im geöffneten Zustand wird das Armband gerade und nimmt eine J-Form ein, die es dank des multistabilen Elements halten kann. Dabei klappt sich das Band auf die Außenseite des Armbandes, wie in Fig. 5 zu sehen ist.

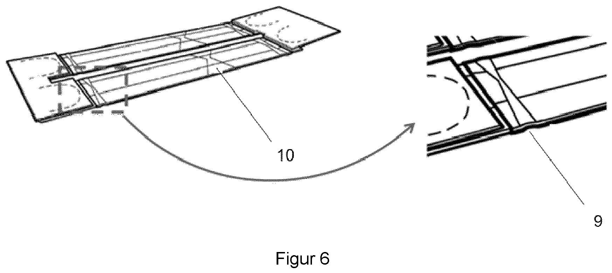

Das multistabile Element kann wie folgt ausgebildet sein:
Das multistabile Element kann zwei bistabile Flachfedern, die durch zwei flache starre Platten zusammengehalten werden, die an Ihren gegenüberliegenden Enden und
parallel zur Aufrollachse der Federn angeordnet sind, aufweisen (Fig. 6). Bevorzugt bleibt dadurch zwischen den Flachfedern ein rechteckiger Spalt.

Bistabile Federn haben vorzugsweise die Form einer länglichen (Metall-)Platte, die quer zu ihrer Längsrichtung eine (gleichmäßig) gebogene/gewölbte Form hat. Aufgrund dieser Form zeichnen sich bistabile Federn durch Formstabilität in zwei verschiedenen Zuständen aus. Wie z. B. von Spielzeug-Klapparmbändern bekannt, ist eine einzelne bistabile Feder formstabil, wenn sie linear ausgerichtet ist. Bei Überwindung eines ersten Biegewiderstandes rollt/biegt sich die Feder in einen formstabilen zweiten Zustand mit einem definierten Radius.

In der erfindungsgemäßen Ausführungsform sind die starren Platten mit den bistabilen Federn, bevorzugt durch Laserschweißen, mit einer bogenförmigen Naht/Knick verbunden, die die Platte bevorzugt bis zu einer Tiefe überlappt, die der Breite einer Feder entspricht.

Der Teil der bistabilen Feder, der auf der Platte aufliegt, ist vorzugsweise abgeflacht.

Zumindest eine der Platten kann mit dem kleinen Modul 3 vorzugsweise teilweise oder vollständig überlappen, eine räumliche Einheit bilden oder zumindest in demselben Bereich vorgesehen sein.

Vorzugsweise ist die erwähnte Knick(linie) 9 an Endabschnitten der bistabilen Feder ausgebildet. Ein Endabschnitt kann als ein Teil der bistabilen Feder in der (unmittelbaren/angrenzenden) Nähe der starren Platten beschrieben werden, insbesondere in einem Übergangsbereich zu einem Teil der bistabilen Feder, der mit der starren Platte verbunden ist.

Grundsätzlich ist ein Knick vorzugsweise ein schmaler, gerader Abschnitt eines Federelementes, an dem die ursprüngliche Kurve in einer Querschnittsansicht vorzugsweise zu einer Geraden wird.

Bei Betrachtung der Feder von der Seite, kann sie im Bereich des Knicks wie eine Welle aussehen. Auf der ganzen Oberfläche der Federn, mit Ausnahme der Enden, kann eine elastische Polymerschicht aufgetragen werden, die nicht nur zur Dämpfung des Biege-/Entbiegevorgangs und zur Verlängerung der Lebensdauer der Feder dient, sondern auch das Geräusch beim Betrieb des Elements vermindern kann. Die bistabilen Federn können zusätzliche Knicklinien 10 haben. Die Knicklinien können vorgesehen sein, einzelne Abschnitte der bistabilen Feder zu trennen. Somit führt die Aktivierung eines einzelnen Abschnitts nur zu einer Formänderung des aktivierten Teils, wobei getrennte Abschnitte der bistabilen Feder in ihrer ursprünglichen (gestreckten) Ausrichtung verbleiben.

Gemäß einer bevorzugten Ausführungsform sind an jedem Ende der mindestens einen bistabilen Feder neben den starren Platten Knicklinien vorgesehen. Dadurch sind die beiden bistabilen Federn entkoppelt und ein Übergang einer Biegekraft wird nicht von einer Feder auf die andere übertragen. Folglich müssen beide Federn aktiviert (z. B. angedrückt) werden, damit das bistabile Element tatsächlich in eine gerollte Form übergehen kann.

Die vorliegende Erfindung weist folgende Vorteile auf: Unterscheidet sich durch Folgendes:
Die angewendete Konstruktion ermöglicht eine spezielle Armbandkinematik, durch welche das Armband leicht, schnell und komfortabel mit einer Hand an- und ausgezogen werden kann. Diese Eigenschaft ist vor allem in den Fällen relevant, wenn man das Armband oft anziehen und abnehmen muss.
1. Im geöffneten Zustand hat das Armband vorzugsweise eine J-Form und das Band ist aufgeklappt auf der Außenseite des Korpus.
2. Beim Anziehen des Armbandes klappt sich der Korpus mit dem eingebauten multistabilen Element zusammen (rollt sich auf), was dazu führt, dass das aufklappbare Band um das Handgelenk herum geschwungen wird und sich dank des Magnetverschlusses (6) am Korpus verschließt.
3. Beim Ausziehen des Armbandes nimmt es wieder seine J-Form an und das Band wird aufgeklappt und in seine vorherige Position zurückgeschwungen.
4. Im angezogenen Zustand umfasst der Korpus den größten Teil des Handgelenks, wobei der andere Teil durch das Band umfasst wird.
5. Das aufklapp- und abnehmbare Band erlaubt es die Länge des Armbands an jedes Handgelenk anzupassen.
6. Die Scharnierverbindung der zwei Teile des großen Moduls 3 dämpfen die mechanische Wirkung und erhöhen die Zuverlässigkeit und den Komfort beim Tragen des Armbands.

### Bezugszeichenliste:

Korpus - 1
Band - 2
Großes Modul - 3
Beweglicher Teil - 4
kleines Modul - 5
Magnetverschluss - 6
Schiebeverschluss - 7;
Klemme - 8;
Achse - 9

## Patentansprüche

1. Handgelenk umschließendes Klapp-Armband, aufweisend
- ein Band (2)
- einen Korpus (1), welcher mit dem Band (2) verbunden ist, mit
o einem endseitig angeordneten ersten Modul (3), aufweisend mindestens zwei feste bogenförmige Elemente,
o einem reversibel verformbaren Teil (4), welches ein multistabiles Element aufweist, wobei das multistabile Element sowohl in einer linearen Ausrichtung als auch in einer aufgerollten Ausrichtung eine stabilisierte Form einnimmt
o ein zweites steifes Modul (5), an welchem das Band (2) angeordnet ist, wobei das Band (2) gegenüber dem Korpus frei schwingend angeordnet ist.

2. Klapp-Armband nach Anspruch 1 **dadurch gekennzeichnet,**
**dass** das Band (2) von dem Korpus (1) abnehmbar ausgebildet ist.

3. Klapp-Armband nach Anspruch 1 oder 2 **dadurch gekennzeichnet,**
**dass** die mindestens zwei bogenförmigen Elemente durch ein Scharnier verbunden sind, wodurch die mechanische Wirkung beim Übergang des multistabilen Elements (5) von einem stabilen Zustand in den anderen auf das Armband gedämpft wird.

4. Klapp-Armband nach einem der Ansprüche 1 bis 3 **dadurch gekennzeichnet,**
**dass** an dem Band ein magnetisches Verschlussteil angeordnet ist, zu welchem ein korrespondierendes Verschlussteil am einem dem Band (2) gegenüberliegenden Ende des Korpus (1) bereitgestellt ist.

5. Klapp-Armband nach einem der Ansprüche 1 bis 4 **dadurch gekennzeichnet,**
**dass** das erste Modul (3) größer ist als das zweite Modul (5).
